# EUROPÄISCHE PATENTANMELDUNG

(11) **EP 0 726 089 A2**
(43) Veröffentlichungstag der Anmeldung: **14.08.1996**
(21) Anmeldenummer: 96101814.0
(22) Anmeldetag: 08.02.1996
(51) Int. Cl.: B01F 7/02

(54) **Einrichtung zum Zerkleinern und Mischen von Abfällen, insbesondere von biologisch abbaubaren Abfällen**

(30) Priorität: 10.02.1995 AT 247/95
(71) Anmelder: Rüf, Anton, A-6972 Fussach (AT)
(72) Erfinder: Rüf, Anton, A-6972 Fussach (AT)
(74) Vertreter: Hefel, Herbert, Dipl.-Ing.

(57) **Zusammenfassung**

Die Einrichtung dient zum Zerkleinern und Mischen von Abfällen, insbesondere von biologisch abbaubaren Abfällen. Sie besitzt einen trogartigen Behälter (1), in dem in Längsrichtung sich erstreckende, zueinander parallel liegende Förderschnecken (4, 5, 6, 7) drehbar gelagert sind. Im bodennahen Bereich des Behälters (1) sind zwei nebeneinander liegende Förderschnecken (4, 5) vorgesehen, und ein weiteres Paar Förderschnecken (6, 7) ist darüberliegend angeordnet. Der trogartige Behälter (1) weist eine Beschickungsöffnung und eine Entleerungsöffnung (10) auf. Die Entleerungsöffnung (10) ist in einer Stirnwand (11) des Behälters vorgesehen. Die bodennah angeordneten Förderschnecken (4, 5) bestehen jeweils in Längsrichtung gesehen aus zwei Wellenabschnitten (A, B) und jedem der Wellenabschnitte (A, B) der Förderschnecken (4, 5) ist ein eigener Antrieb zugeordnet. Die verschließbare Entleerungsöffnung (10) ist im Stirnbereich dieser bodennah angeordneten Förderschnecken (4, 5) vorgesehen.

## Beschreibung

Die Erfindung bezieht sich auf eine Einrichtung zum Zerkleinern und Mischen von Abfällen, insbesondere von biologisch abbaubaren Abfällen mit einem trogartigen Behälter, in dem in Längsrichtung des Behälters sich erstreckende, zueinander parallel liegende Förderschnecken drehbar gelagert sind, wobei im bodennahen Bereich des Behälters mindestens zwei nebeneinander liegende Förderschnecken vorgesehen sind und mindestens ein weiteres Paar Förderschnecken darüberliegend angeordnet ist und der trogartige Behälter mindestens eine Beschickungsöffnung und mindestens eine Entleerungsöffnung aufweist.

Eine Einrichtung dieser Art ist aus der EU-A1-0536767 bekannt. Der trogartige Behälter wird von oben her beschickt, und im Boden des Behälters ist eine Entleerungsöffnung mit einer Verschlußklappe vorgesehen, durch welche das zerkleinerte und vermischte Gut entladen werden kann. Biologisch abbaubare Abfälle sind, was ihre Aufbereitung und Verarbeitung betrifft, schwierige Ausgangsstoffe. Sie werden im Behälter durch die Förderschnecken zerkleinert und gemischt und bilden dabei eine schmierige und klebrige Masse. Nach der Freigabe der Entleerungsöffnung dauert es daher sehr lange, bis diese schmierige und klebrige Masse zur Gänze durch diese im Boden des Behälters befindliche Entleerungsöffnung ausgebracht ist. Einrichtungen dieser Art werden in kommunalen Abfallaufbereitungsanlagen eingesetzt, wo Tag für Tag große Mengen der erwähnten Abfälle anfallen, die möglichst rasch aufbereitet werden müssen, damit sie deponiert werden können. Es ist daher von wesentlicher Bedeutung, daß die Aufbereitung und die damit verbundenen Arbeiten innerhalb kurzer Zeit abgewickelt werden können. Bei der hier erwähnten vorbekannten Einrichtung nimmt in der Regel die Entleerung mehr Zeit in Anspruch als die Zerkleinerung und Mischung der biologischen Abfälle.

In diesem Zusammenhang sind auch die Mischbehälter nach den US-PS 3 797 807 und 3 995 836 zu erwähnen, die in landwirtschaftlichen Betrieben eingesetzt werden. Mit diesen Einrichtungen werden Futtergetreide und Zuschlagsstoffe vermengt. Das zu mischende Material ist trocken und rieselfähig. Der trogartige Behälter wird von oben beschickt und besitzt in einer seiner beiden Seitenwände eine Entleerungsöffnung, die mittels einer hydraulisch betätigbaren Klappe zu öffnen und zu schließen ist. An diese Entleerungsöffnung schließt ein Förderband an, über das das gemischte Futtergetreide ausgetragen werden kann. Die einstückige Welle derjenigen Förderschnecke, die dieser Entleerungsöffnung benachbart liegt, trägt im Bereich der Entleerungsöffnung pattelartige Schaufeln, die den Entleerungsvorgang unterstützen. Darüberhinaus ist das von der einstückigen Welle dieser Förderschnecke getragene Schraubenband unterteilt, und zwar in der Weise, daß die beiden Teile des Schraubenbandes, die zu den beiden Seiten der Entleerungsöffnung verlaufen, einander entgegengesetzt gerichtete Steigungen aufweisen, das eine Schraubenband also rechtsgängig, das andere linksgängig ist, so daß diese Förderschnecke das zu beiden Seiten der Entleerungsöffnung liegende schütt- und rieselfähige Futtergetreide unmittelbar zu diesen pattelartigen Schaufeln fördert. Für die Aufbereitung von biologisch abbaubaren Abfällen sind solche Futtermischer allerdings nicht geeignet, da einerseits die der Entleerungsöffnung benachbart liegende Förderschnecke mit ihren pattelartigen Schaufeln den Misch- und Zerkleinerungsvorgang beeinträchtigt und die schmierige und klebrige Masse, die diese zerkleinerten biologischen Abfälle bilden, nicht nach oben aus dem Behälter ausgetragen werden können.

Ausgehend von diesem Stand der Technik hat sich die Erfindung die Aufgabe gestellt, eine Einrichtung der eingangs genannten Art dahingehend weiterzuentwickeln und zu verbessern, daß nach Abschluß des Zerkleinerungs- und Mischvorganges das schmierige und klebrige Mischgut möglichst kurzfristig aus dem Behälter ausgetragen werden kann, so daß die Entleerung des Behälters nicht mehr Zeit in Anspruch nimmt als das Mischen und Zerkleinern, vorzugsweise sogar weniger. Zur Lösung dieser Aufgabe schlägt die Erfindung vor, daß die Entleerungsöffnung in einer Stirnwand des Behälters vorgesehen ist und zumindest die bodennahe angeordneten Förderschnecken jeweils in Längsrichtung gesehen aus zwei Wellenabschnitten bestehen und jedem der Wellenabschnitte der Förderschnecken ein eigener Antrieb zugeordnet ist und die verschließbare Entleerungsöffnung im Stirnbereich dieser bodennah angeordneten Förderschnecken vorgesehen ist. Zweckmäßige Ausgestaltungen der Erfindung sind in den Unteransprüchen festgehalten.

Um die Erfindung zu veranschaulichen, wird in der beiliegenden Zeichnung ein Ausführungsbeispiel näher erörtert, ohne die Erfindung dadurch auf dieses gezeigte Ausführungsbeispiel einzuschränken. Es zeigen:
Fig. 1 eine Seitensicht der Einrichtung, zum Teil aufgerissen;
Fig. 2 eine Stirnansicht der Einrichtung in einem gegenüber Fig. 1 vergrößerten Maßstab.

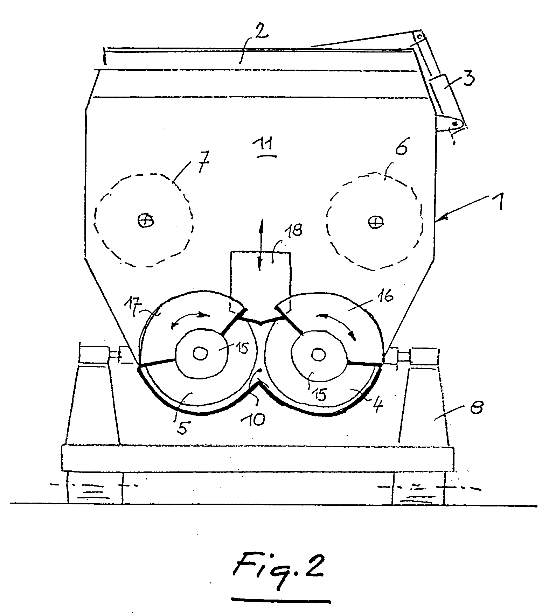

Ein trogartiger, langgestreckter Behälter 1 ist oben mit einem Deckel 2 verschließbar, der mittels Kolbenzylindereinheiten 3 um eine zur Längsachse des Behälters 1 parallele Achse heb- und senkbar ist. Die Längswandungen des Behälters 1 können wenigstens zum Teil zweischalig ausgebildet sein, wobei durch diese zweischaligen Wandteile ein Wärmeträgermedium leitbar ist, um das Mischgut anzuwärmen und aufzuheizen. In den beiliegenden Zeichnungen ist diese zweischalige Ausgestaltung der Behälterwand jedoch nicht gezeigt. Als Wärmeträgermedium können beispielsweise die Abgase eines Antriebsmotors eingesetzt werden, der zum Betrieb der Einrichtung dient. In diesem Behälter 1 sind im bodennahen Bereich zwei Förderschnecken 4 und 5 drehbar gelagert. Diese beiden bodennahen Förderschnecken 4 und 5 liegen nahe beieinander, und der benachbarte Bodenbereich des Behälters 1 ist zum Teil der Umfangskontur dieser beiden Förderschnecken 4 und 5 angepaßt (Fig. 2). Oberhalb dieser beiden Förderschnecken 4 und 5 ist ein weiteres Förderschneckenpaar 6 und 7 vorgesehen. Dieser Behälter 1 ist auf einem Chassis 8 gelagert, das auch eine Antriebseinheit 9 trägt mit einer Hydraulikpumpe, die zum Betrieb der Hydraulikmotoren den notwendigen hydraulischen Druck aufbaut, mit dem die Förderschnecken angetrieben werden. Hydraulische Antriebsmotoren sind für die Erfindung nicht zwingend. Grundsätzlich wäre es möglich, Antriebsmotoren anderer Art hier einzusetzen.

Die Entleerungsöffnung 10 ist in der einen Stirnwand 11 des druckartigen Behälters 1 vorgesehen, und zwar im Stirnbereich der beiden bodennahen Förderschnecken 4 und 5. Die Wellen dieser bodennahen Förderschnecken 4 und 5 sind, bezogen auf ihre Längserstreckung, zweigeteilt. Der eine Wellenabschnitt A erstreckt sich über den größten Teil der Länge des trogartigen Behälters 1, der kurze Wellenabschnitt B umfaßt nur wenige Schraubenwindungen und ist beispielsweise 60 bis 100 cm lang. Die einander zugewandten Enden der beiden Wellenabschnitte A und B jeweils einer Förderschnecke 4 oder 5 sind ineinander geführt und ineinander gelagert.

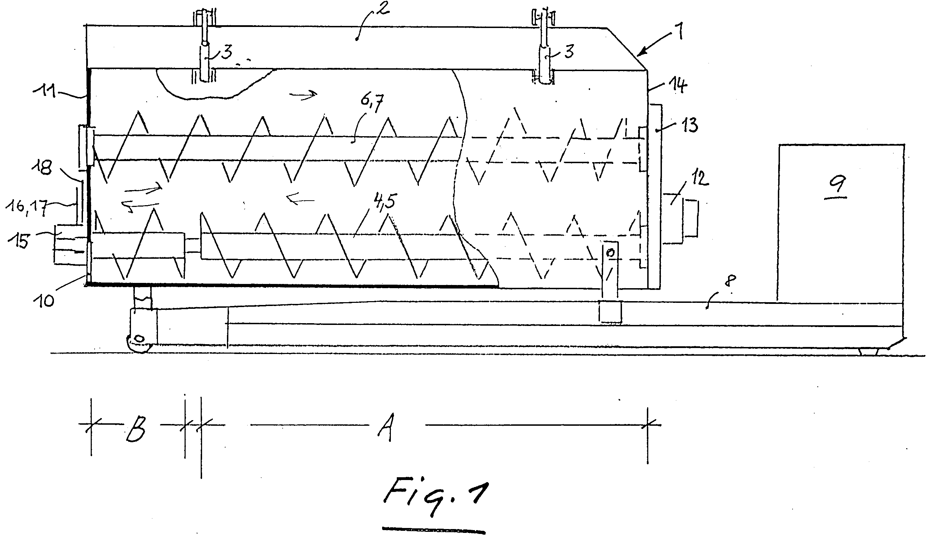

Die beiden oben liegenden Förderschnecken 6 und 7 sowie die langen Wellenabschnitte A der bodennahen Förderschnecken 4 und 5 werden hier von einem Hydraulikmotor 12 angetrieben und einem Vorgelege 13, das an der einen Stirnwand 14 des trogartigen Behälters 1 angeflanscht ist. Das Vorgelege 13 ist nun so ausgelegt, daß beim betriebsmäßigen Einsatz die langen Wellenabschnitte A der bodennahen Förderschnecken 4 und 5 von rechts nach links (Fig. 1) transportieren, Wogegen die oben liegenden Förderschnecken 6 und 7 das Mischgut in die entgegengesetzte Richtung, also von links nach rechts schieben. Für die kurzen Wellenabschnitte B der bodennahen Förderschnecken 4 und 5 ist an der Stirnwand 11 jeweils ein eigener Antriebsmotor 5 angeordnet. Diese Antriebsmotoren 5 der beiden Wellenabschnitte B sind reversibel ausgelegt, so daß diese kurzen Wellenabschnitte B sowohl im wie auch gegen den Uhrzeigersinn angetrieben werden können.

Die Entleerungsöffnung 10, in deren Randbereich die Drehlager der kurzen Wellenabschnitte B der bodennahen Förderschnecken 4 und 5 liegen, ist durch einen mehrteiligen Schieber verschließbar. Dieser mehrteilige Schieber besteht aus den beiden schwenkbar gelagerten Schiebern 16 und 17, deren Schwenkachsen koaxial liegen mit den Achsen der bodennahen Förderschnecken 4 und 5, und einem dazwischen liegenden Schieber 18, der linear verstellbar ist. Zur Betätigung dieser Schieber 16, 17 und 18 können beispielsweise Kolbenzylindereinheiten vorgesehen werden.

Die Schraubenwendeln der Wellenabschnitte A und B der beiden bodennahen Förderschnecken 4 und 5 können gleichsinnig oder gegensinnig verlaufen. In der nachfolgenden Schilderung der Arbeitsweise der Einrichtung ist vorausgesetzt, daß diese Schraubenwendeln der beiden Wellenabschnitte A und B gleichsinnig verlaufen.

Diese Einrichtung arbeitet nun wie folgt, wobei vorausgesetzt ist, daß die Schieber 16, 17 und 18 in ihre Schließstellung gefahren sind: Über den Motor 12 und das Vorgelege 13 werden nun, nachdem bei angehobenem Deckel 2 der Behälter 1 von oben her beschickt worden ist, die langen Wellenabschnitte A der bodennahen Förderschnecken 4 und 5 so angetrieben, daß sie von rechts nach links (Fig. 2) fördern, die kurzen Wellenabschnitte B hingegen sind so angetrieben, daß sie in entgegengesetzte Richtung fördern. Die oberen Förderschnecken 6 und 7 sind so angetrieben, daß sie von links nach rechts fördern. Dadurch wird das im Bodenbereich liegende Mischgut vorerst nach links transportiert und durch die gegensinnig transportierenden, kurzen Wellenabschnitte B hier im Bereich der Stirnwand 11 angehäuft und aufgetürmt, so daß es in den Bereich der oberen Förderschnecken 6 und 7 gelangt und von diesen nun wieder nach rechts geschoben wird. Das eingebrachte Gut wird so lange in dieser Art und Weise im Behälter 1 umgesetzt, bis es ausreichend zerkleinert und vermischt ist. Die Schraubenwendeln der Förderschnecken sind zweckmäßigerweise mit Reißmessern bestückt, die auswechselbar angeordnet sind.

Ist der Zerkleinerungs- und Mischvorgang beendet und soll nun das in der Regel schmierige und klebrige Mischgut ausgetragen werden, so werden die Schieber 16, 17 und 18 in ihre Offenstellung gefahren, und die Antriebsmotoren 15 der beiden kurzen Wellenabschnitte B der bodennahen Förderschnecken 4 und 5 werden nun umgeschaltet, so daß diese kurzen Wellenabschnitte B ebenfalls von rechts nach links transportieren, genauso wie die langen Wellenabschnitte A. Dadurch wird erreicht, daß das Mischgut nun zwangsweise durch die Entleerungsöffnung ausgeschoben wird, was nur wenige Minuten dauert.

Der Entleerungsvorgang bei einem Behälter gleicher Größe und gleichen Aufbaues dauert bei der Einrichtung nach dem eingangs geschilderten Stand der Technik bis zu drei Viertelstunden, wogegen mit der erfindungsgemäßen Einrichtung der Behälter in wenigen Minuten völlig entleert ist. Da Einrichtungen der gegenständlichen Art bei kommunalen Entsorgungsanlagen eingesetzt werden und in der Regel solche Einrichtungen in einem Mehrschichtbetrieb laufen, wird durch die erfindungsgemäße Ausgestaltung der Einrichtung eine ganz erhebliche und wesentliche Zeiteinsparung erzielt mit der Folge, daß innerhalb der vorgesehenen Arbeitszeit mehr Mischvorgänge durch die Einrichtung durchgesetzt werden können, als dies mit der bekannten Anlage der Fall ist.

### Legende zu den Hinweisziffern

- 1: Behälter
- 2: Deckel
- 3: Kolbenzylindereinheit
- 4: Förderschnecke
- 5: Förderschnecke
- 6: Förderschnecke
- 7: Förderschnecke
- 8: Chassis
- 9: Antriebseinheit
- 10: Entleerungsöffnung
- 11: Stirnwand
- 12: Hydraulikmotor
- 13: Vorgelege
- 14: Stirnwand
- 15: Antriebsmotor
- 16: Schieber
- 17: Schieber
- 18: Schieber

## Patentansprüche

1. Einrichtung zum Zerkleinern und Mischen von Abfällen, insbesondere von biologisch abbaubaren Abfällen mit einem trogartigen Behälter, in dem in Längsrichtung des Behälters sich erstreckende, zueinander parallel liegende Förderschnecken drehbar gelagert sind, wobei im bodennahen Bereich des Behälters mindestens zwei nebeneinander liegende Förderschnecken vorgesehen sind und mindestens ein weiteres Paar Förderschnecken darüberliegend angeordnet ist und der trogartige Behälter mindestens eine Beschickungsöffnung und mindestens eine Entleerungsöffnung aufweist, dadurch gekennzeichnet, daß die Entleerungsöffnung (10) in einer Stirnwand (11) des Behälters vorgesehen ist und zumindest die bodennahe angeordneten Förderschnecken (4, 5) jeweils in Längsrichtung gesehen aus zwei Wellenabschnitten (A, B) bestehen und jedem der Wellenabschnitte (A, B) der Förderschnecken (4, 5) ein eigener Antrieb zugeordnet ist und die verschließbare Entleerungsöffnung (10) im Stirnbereich dieser bodennah angeordneten Förderschnecken (4, 5) vorgesehen ist.

2. Einrichtung nach Anspruch 1, dadurch gekennzeichnet, daß der der Entleerungsöffnung (10) benachbart liegende Wellenabschnitt (B) der bodennahen Förderschnecken (4, 5) kürzer ist als der andere Wellenabschnitt (A) dieser zweigeteilten Förderschnecken (4, 5).

3. Einrichtung nach Anspruch 1 oder 2, dadurch gekennzeichnet, daß zur Verschließung der Entleerungsöffnung (10) mehrere in zueinander parallelen Ebenen verschieb- bzw. verschwenkbare Schieber (16, 17,18) vorgesehen sind.

4. Einrichtung nach Anspruch 1, dadurch gekennzeichnet, daß die Drehlager der bodennahen Förderschnecken (4, 5) im Randbereich der Entleerungsöffnung (10) vorgesehen sind.

5. Einrichtung nach Anspruch 3, dadurch gekennzeichnet, daß die Schwenkachsen der verschwenkbaren Schieber (16, 17) koaxial mit den Achsen der im bodennahen Bereich angeordneten Förderschnecken (4, 5) liegen.

6. Einrichtung nach Anspruch 1, dadurch gekennzeichnet, daß die einander zugewandten Enden der jeweiligen beiden Wellenabschnitte (A, B) einer bodennahen Förderschnecke (4, 5) ineinander geführt und ineinander gelagert sind.

7. Einrichtung nach Anspruch 3, dadurch gekennzeichnet, daß zwischen den beiden verschwenkbaren Schiebern (16, 17) an der Entleerungsöffnung (10) ein linear verstellbarer Schieber (18) vorgesehen ist.

8. Einrichtung nach Anspruch 1, dadurch gekennzeichnet, daß zumindest der Antrieb (15) der kurzen Wellenabschnitte (B) der Förderschnecken (4, 5) reversibel ausgebildet ist.

9. Einrichtung nach einem der Ansprüche 1 bis 8, dadurch gekennzeichnet, daß der Behälter (1), bzw. dessen bodenseitiger Teil und/oder dessen Seitenwände doppelwandig ausgebildet sind zur Aufnahme eines Heizmediums.
